# EUROPEAN PATENT APPLICATION

(11) **EP 1 505 829 A1**
(43) Date of publication of application: **09.02.2005**
(21) Application number: 03077524.1
(22) Date of filing: 08.08.2003
(51) Int. Cl.: H04N 5/74, H04N 9/12

(54) **Simulation of attendance at a live event**

(71) Applicant: Kutner, Ben, Ottawa, Ontario K2A 3T3 (CA)
(72) Inventor: Kutner, Ben, Ottawa, Ontario K2A 3T3 (CA)
(74) Representative: Kupecz, A., Drs. c.s.

(57) **Abstract**

A method and apparatus for providing a simulation of attendance at a live event, performance or the like. The apparatus includes a wide angle video projection screen or visual display system (up to a complete sphere) upon which video images of an actual real-time event are presented to an audience. The video images are recorded by a video camera set in a fixed position at the live event. A modular structure is provided at a remote location and is designed to duplicate the viewing environment of the event such that the audience has the feel of sitting in a loge or box seats. The invention further encompasses a plurality of said modular structures at separate remote locations. The visual effect of the invention is that audience members in the modular structures, when presented with the video images of the event or performance, feel as if they are in attendance at the actual event.

## Description

### Field of the Invention

This invention relates to a method for creating virtual realities or telepresence, including apparatus, construction and network architecture for achieving same. In particular, the invention relates to a method and apparatus for re-creating, in a modular theatre structure, the experience of attending at a live event or performance.

### Background of the Invention

Various technologies have been employed to simulate environments, such as for flight simulation and training, as well as for increasing the perception of realism of multi-media presentations. Existing systems typically focus on technological developments and improvements but do not disclose a method or framework for distribution to multiple audiences at multiple locations, nor do they disclose the simultaneous re-creation of the experience of being at a live event for an audience at a remote location.

For instance, U.S. Patent No. 6,141,034 issued to McCutchen on October 31, 2000, describes a camera for dodecahedral imaging and a modular global video projector for projecting up to an entire spherical image. The patent also includes an easily assembled modular screen for a dome theatre with a plurality of screen elements attached to a geodesic framework. The invention focusses on the technological aspects of photographing and projecting an image onto spherical screens.

U.S. Patent No. 5,130,794 issued to Ritchey on July 14, 1992, describes a panoramic based virtual reality display system that divides a composite image into a plurality of image segments for display on individual displays of multiple video display assemblies. The images are gathered by a panoramic optical assembly for distribution on the video displays. The drawings show a cube arrangement, see Figures 34 through 39. Multiple display assemblies are preferably housed within a closed structure and are mounted in all viewable directions. The display assembly comprises a structure that encloses an audience or even a single viewer. The display units utilized in that patent include flat panels such as large plasma, electroluminescent or liquid crystal displays as well as rear projection screens. U.S. Patent No. 5,023,725 issued to McCutchen on January 11, 1991 describes dodecahedral imaging and the associated technology for photography and projection. The patent is geared towards the projection of apparently continuous images across the interior surface of a dome or spherical theatre by projecting pentagon shaped image frames onto the interior of the dome.

Training environments and flight simulators also employ similar technology. Examples are Canadian Patent No. 2,287,650 issued to Amery on May 20, 2000 and U.S. Patent No. 5,137,450 issued to Thomas on August 11, 1992. Amery describes simulating training environments, such as for flight simulation. The invention includes a number of adjacent video image generation and display modules. Each module includes an image generator that generates a video image that is a portion of a composite display image. The image generation and display modules are preferably mounted in a supporting structure designed to hold each of the modules. Thomas describes a wrap around display system for presenting visual imagery for a flight simulator. The display system includes eight identical pentagon shaped translucent rear projection screens joined together at their edges to form a partial dodecahedron. The projection devices are mounted outside the partial dodecahedron to direct an appropriate simulator image to the rear of a pentagon screen.

The above cited patents disclose technologies for and architectures of virtual reality environments. However, none disclose the simultaneous visual simulation of an actual event presented at a remote location from that event as viewed from a fixed location. Although television broadcasts allow a viewer to witness an event from his or her own home, a television broadcast detracts from the "reality" experienced by the viewer as there are voice overs, replays, and various selected views of the event presented. Therefore, the viewer is not immersed in a life-like environment.

### Summary of the Invention

It is, therefore, a principal object of the invention to provide a method to simulate attendance at a live event or performance. Unlike the above cited patents, the invention disclosed herein contemplates a series of virtual reality theatres or modules at various sites in various cities, wherein a broadcast video of a live event or performance is presented to an audience on a wide angle screen surface. The invention simulates a real life event for a remote audience as if the audience were actually at the event sitting in the best seats. For example, a play-off hockey game may be presented from seats looking down on centre ice. Because of the present invention, this experience can be simulated for many viewers at many different sites at the same time as the actual hockey game is taking place. This allows many more fans to "attend" and enjoy the same experience for a reduced price of a ticket to the live event. To further enhance the life-like experience, stadium style seating may be provided within the modular theatre structure in a box seating or loge arrangement.

Similarly, the simulation and immersive feeling of being in virtual attendance at a performance such as live theatre or a concert is contemplated. The panoramic view of the proscenium stage and adjacent auditorium as seen from a loge or box seat in various performing arts and culture facilities may be presented to remote audiences.

The invention comprises a video camera or digital imaging device to record a real-time, or near real-time event or performance and capture a wide field, preferably greater than a viewer's field of vision. The device is to be positioned at a selected vantage point and set in a fixed position. For example, the digital imaging device may be positioned in a box or loge seat at the arena of a hockey game so as to capture the same view as that of a person in attendance at the game and sitting in that same box or loge seat. The camera captures a panoramic view of the entire visual space of the venue without the need for panning horizontally or vertically.

The preferred embodiment employs a video camera that is a high resolution imaging camera, such as DALSA (digital camera), Ikegami (HDTV), Thomson Multi-Media (HDTV or digital camera).

The invention further comprises a delivery means to transmit a live or stored delayed feed from the video camera and event to a remote location. The delivery means may include a satellite, or an equivalent transmission system, capable of high speed broadband digital video (for example, at 250 megabits per second or greater) on multiple channels. Such a system allows for transmission of the live or delayed feed to a plurality of remote locations.

A receiving means receives the live or stored delayed feed and a projection means projects the images onto a video projection screen or a visual display system giving a panoramic viewing surface. The projection means can be, but is not limited to, available CRT, DLP or DILA projectors by various manufacturers such as CHRISTIE, BARCO and JVC. The mode of presentation at the remote location can also include and is not limited to high definition television, multiple video display assemblies, rear and frontal projection screens, and three dimensional viewing surfaces such as the inside of a dome structure. The preferred embodiment uses a multi-channel video projection system such as SEOS, MECHOYNE using a mirror assembly behind the screen.

Where the received images are mosaic segments, the projected images may be projected onto a screen in various formats. The invention contemplates use of digital edge blending technology (such as PANORAMTECH and SEOS) to remove grid lines between channels to achieve a uniformly high resolution across the screen. For example, each mosaic segment at 1280 (units??) horizontal by 760 vertical or 4000 by 2000 pixels across the entire screen in a 3 by 2 array.

The structure contemplated for housing the screen and audience at the remote location is modular and can be developed into a series or network of modules and modular structures. An individual module can encompass a viewing surface and stadium style seating in an audience area opposite the viewing surface.

Ideally, the theatre structure or module is enclosed and of interior or exterior grade construction. The size of the theatre structure in the preferred embodiment is approximately 30 by 30 feet at its base and 18 feet high. It includes seating for approximately 30 to 50 people in tiered rows simulating the exact scale of seating at sports or arts venues.

In the preferred embodiment a frame is vertically situated between the stadium style seating and the screen. The audience views the projected video on the screen through an opening in the frame.

The frame opening is positioned and sized such that the peripheral view from any of the seats to the screen or mirror assembly is limited (for example, to angles of approximately 120 to 180 degrees horizontally and 45 to 80 degrees vertically). This prevents the viewers from seeing the screen edges or mirror assemblies. In the preferred embodiment, the opening in the frame is a minimum of approximately 16 feet wide by 9 feet high for optimal viewing of the screen by a smaller audience of 30 to 50 people. In other embodiments, the size of the opening may be multiples thereof or by using the aspect ration of HDTV (being 16:9, horizontal to vertical).

Six projectors are used in the preferred embodiment and these are arranged in two rows of three projectors. The first set of three projectors are arranged horizontally and linearly and are evenly spaced from one another. The projectors can be mounted to the top of the frame outside the audience space thereby being hidden from the view by the audience. These projectors are aimed forwards to the screen or mirror (as in collimation).

The second set of three projectors are arranged horizontally and linearly and are evenly spaced from one another. The projectors are located underneath and outside of the frame. These projectors are aimed forwards and upwards to the screen. The invention allows for the six projectors to be positioned at various angles towards the screen and by means of edge blending to create a single image on the screen without a visible matrix or grid lines.

A person situated at the remote location and viewing the video projection screen will be able to "virtually attend" the live event, performance or the like as if that person were actually in attendance at same.

### Brief Description of the Drawings

Fig. 1 is a schematic representation of the method for providing a simulation of attendance at a live event, performance or the like.
Fig. 2 is a longitudinal section through the interior of a proposed theatre structure used to house the audience, projection screen and projector.
Fig. 3 is a plan of a modular structure attached to a room or building.

### Detailed Description of the Drawings

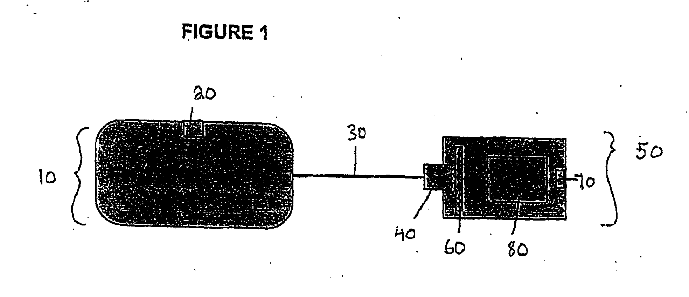

Referring to Fig. 1, a live event or performance is under way at a venue 10 such as a hockey game, or a concert. Affixed video camera 20 is situated at a vantage point within the venue so as to record a wide angle view of the event. The view recorded by the video camera is substantially the view as seen by a person in attendance at the event. Video camera 20 is maintained in a fixed position throughout the performance.
Delivery means 30, transmits the live or tape delayed feed from the video camera to a remote location 50.

A receiving means 40 receives the live or tape delayed feed and relays it to a projection means 70. The image is then projected onto a screen or visual display 60 for viewing by the audience

Stadium style seating 80 may be provided.

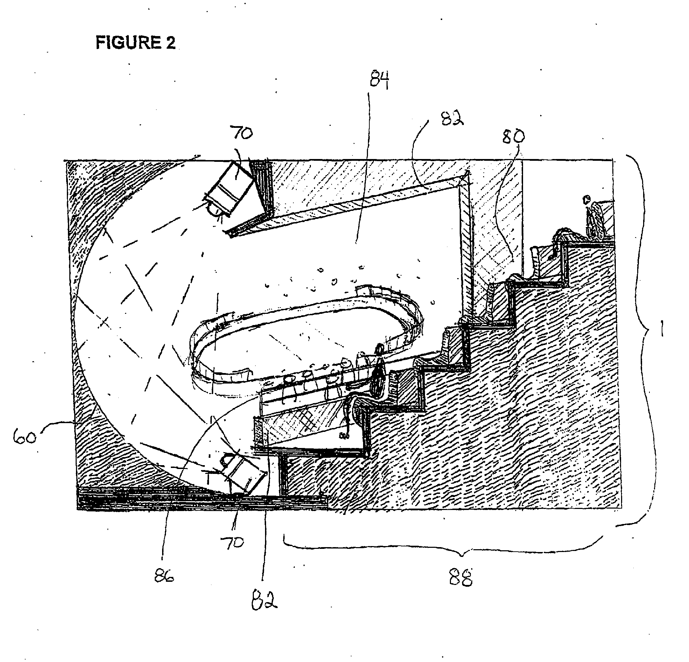

In order that the invention may be more clearly understood, reference is made to Fig. 2 which illustrates a preferred embodiment of the theatre structure, by way of example. Fig. 2 shows the remote location 50 as a theatre structure housing a frontal projection video screen 60 and projection means 70. Stadium style seating 80 is provided in front of the screen. Between the screen and the stadium style seating, is a vertically positioned frame 82 with an opening 84 allowing a view to the screen. A railing 86 protects the audience from falling out of the audience area 88. There may a multiplicity of projectors utilized to project the video onto screen 60. Fig. 2 shows the placement of projection means 70 above the frame opening 84 and outside the audience area 88, hidden from view by the audience. Fig. 2 also shows placement of projection means 70 below the frame opening 84 and outside the audience area 88, hidden from view by the audience.

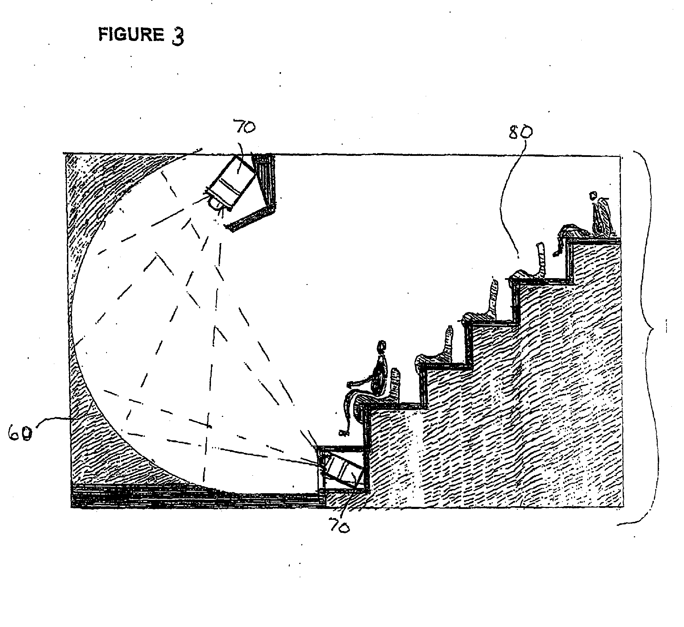

Fig. 3 is an alternate embodiment of the theatre structure and it does not include the frame 82 and frame opening 84 of Fig. 2. The theatre structure of Fig. 3 houses a projection screen 60, projection means 70, stadium style seating 80 and projectors.

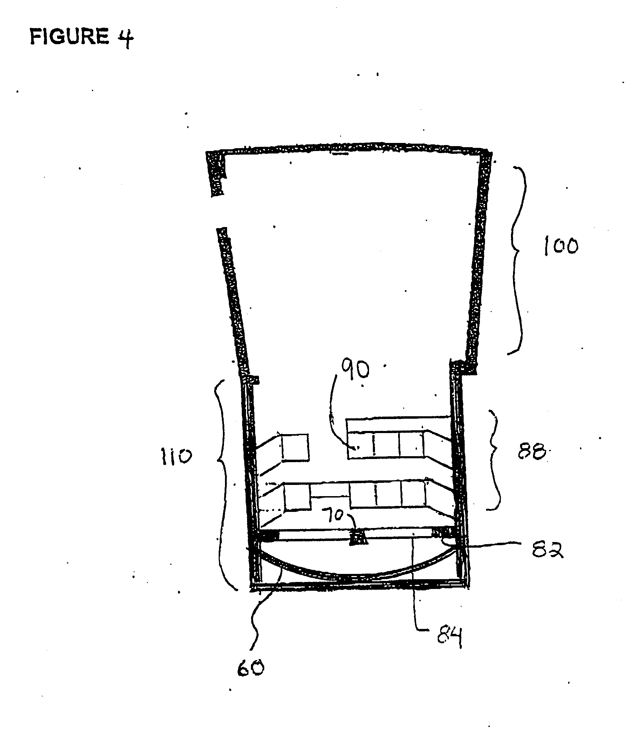

Fig. 4 provides an example of one of the economic applications of the invention. A modular structure 110 with loge or box seats 90 is built within or attached to another building. For example, the modular structure 110 could be attached to a sports bar such that customers can mingle in the bar or go and sit down in the box seats 90 with their drinks and watch that evening's hockey game as if they were actually at the game. Alternatively, corporate sponsors of venues or teams may have a modular structure built at their head offices where employees and clients can be given the treat of a "real life" hockey game. Fig. 3 shows the modular structure 110 attached to room 100 that may be a bar or, for instance, a suite in a corporate building. Video projection screen 60, projection means 70, loge or box seats 90 and the frame 82 and frame opening 84 are also situated in this embodiment of the modular structure.

In view of the foregoing description, various other embodiments are possible. Accordingly, the scope of the appended claims should not be limited to the description of the preferred embodiments contained herein.

## Claims

1. An apparatus for providing a simulation of attendance at a live event, performance or the like, comprising:
(i) an audio-visual recording means for recording a live event, performance or the like;
(ii) a delivery means to transmit a live or stored delayed feed from said recording means to a remote location;
(iii) a receiving means to receive said live or tape delayed feed at said remote location;
(iv) a projection means to project said live or tape delayed feed;
(v) a video projection screen giving a panoramic surface upon which to present said live or stored delayed feed at said remote location.

2. The apparatus of claim 1 wherein said audio-visual recording means is positioned at a fixed position at a selected vantage point, said audio-visual recording means being capable of capturing a panoramic image.

3. The apparatus of claim 1 wherein said remote location comprises a modular structure, said modular structure being enclosed and containing said projection means and said video projection screen, said modular structure also contains an audience area from which an audience may view said video projection screen.

4. The modular structure of claim 3, wherein the modular structure contains stadium style seating in the audience area that simulates the seating in a box, loge or suite.

5. The modular structure of claim 4 wherein the modular structure is divided by a frame situated between the video projection screen and the audience area, said frame is opaque and of a size that permits viewing of the video projection screen through its opening by a viewer seated in the stadium style seating, but obstructs from view by its frame, the edges of the video projection screen.

6. The apparatus of claims 3 through 6 including a plurality of modular structures, each of said modular structures being positioned at a separate remote location.

7. A method of providing a simulation of attendance at a live event, performance or the like, including the steps of:
(i) selecting a vantage point from which to view said live event, performance or the like;
(ii) positioning at least one audio-visual recording means in a fixed position at said vantage point;
(iii) transmitting a live or stored delayed feed from said audio-visual recording means to a remote location;
(iv) playing said feed at said remote location utilizing a video projection screen giving a panoramic viewing surface, whereby a person situated at said remote location, and viewing said video projection screen will be able to view said live event, performance or the like as if that person were in attendance at same.
